# EUROPEAN PATENT SPECIFICATION

(11) **EP 3 617 011 B1**
(45) Date of publication and mention of the grant of the patent: **16.06.2021**
(21) Application number: 18465566.0
(22) Date of filing: 27.08.2018
(51) Int. Cl.: B60R 25/40, G07C 9/00

(54) **ELECTRONIC KEY AND METHOD FOR OPERATING AN ELECTRONIC KEY**
ELEKTRONISCHER SCHLÜSSEL UND VERFAHREN ZUM BETRIEB EINES ELEKTRONISCHEN SCHLÜSSELS
CLÉ ÉLECTRONIQUE ET PROCÉDÉ DE FONCTIONNEMENT ASSOCIÉ

(43) Date of publication of application: 04.03.2020
(73) Proprietor: Continental Automotive GmbH, 30165 Hannover (DE)
(72) Inventor: Stef, Adrian Viorel, 300756 Timisoara (RO); Andrica, Gerard, 300715 Timisoara (RO)
(74) Representative: Continental Corporation

(56) References cited:
- EP-A2- 1 128 007
- WO-A1-2005/109351
- US-A1- 2008 309 457

## Description

The current invention relates to an electronic key and a related method for operating an electronic key, in particular an electronic key for a vehicle.

Most vehicles today may be unlocked and started using an electronic key. Some start and access systems are known in which the user needs to press an unlocking button on the vehicle key to unlock the vehicle. In order to start the vehicle, the key usually has to be inserted into an arrangement which replaces the ignition switch, as is known from older vehicles. In addition to an unlocking button, such electronic keys may also have one or more other buttons, such as a locking button or a separate button for locking and unlocking the trunk independent from the other vehicle doors. With such vehicle keys, there is a risk that one or more buttons may get stuck. That is, a button may be pressed intentionally or unintentionally and subsequently remain unintentionally in the pressed condition without returning to its initial unpressed/released condition.

Often, one or more of the electronic components included in an electronic vehicle key (e.g., antennas or microcontrollers) are switched into a low power mode when no button is being pressed and, therefore, no functionality of the electronic key is needed. When a button gets stuck in such a key, this may result in a high power consumption of the electronic vehicle key as the components will not switch into low power mode as long as the button is stuck. This drastically reduces battery lifetime.

The problem to be solved by the current invention is to provide an improved electronic key and method which need less power during a button stuck condition and are still very robust.

This problem is solved by an electronic key according to claim 1 and a method according to claim 10. Configurations and further developments of the invention are the subject of the dependent claims.

A electronic key for a vehicle includes at least one button for controlling at least one vehicle function, wherein each of the at least one button can take on a pressed state and a released state, a signal unit that is configured to send command signals to the vehicle upon request of a user, and a microcontroller. The electronic key can be operated in a normal state and in an error state. When the electronic key is in the normal state, the electronic key is configured to change into a low power mode when no command signals are sent to the vehicle and each of the at least one button is released, and to change into an active mode when at least one of the buttons is pressed. When it is detected that a button is unintentionally stuck in a pressed state and does not return to the released state, the electronic key is configured to change into the error state, wherein, when the electronic key is in the error state, the electronic key is configured to mark the at least one button as being stuck, to change into the low power mode when no command signals are sent to the vehicle notwithstanding that at least one button is being pressed, and to change into the active mode when the stuck button is released.

In this way, power consumption of the electronic key may be reduced while the electronic key is still very robust.

When the electronic key is in the normal mode and at least one button is pressed and causes the electronic key to switch from the low power mode to the active mode, at least one command signal may be sent to the vehicle in reaction to the at least one button being pressed.

The operation of several vehicle functions may be controlled by sending out respective command signals upon a user's request.

Before sending the at least one command signal to the vehicle, the button that has been pressed may be debounced.

The correct function of the respective button may be ensured by debouncing the button.

When it is detected that the at least one stuck button has returned to its released position, the electronic key may return from the error mode to the normal mode.

Normal operation, therefore, is possible if the button is no longer stuck.

Marking the at least one button as being stuck may comprise storing a respective information in a memory of the microcontroller.

By reading the information from the microcontroller memory, the electronic key always knows when a button is stuck.

When the at least one stuck button has returned to its released position, the information may be deleted from the memory of the microcontroller.

If no such information may be read from the memory, the electronic key knows that none of the buttons is presently stuck.

The electronic key may include at least two buttons, wherein, when it is detected that one of the buttons is stuck and the electronic key changes into the error mode, the electronic key may be further configured to change from the low power mode into the active mode when at least one of the remaining buttons is pressed.

The function of the remaining buttons is not affected by another button being stuck.

When the electronic key changes into the low power mode, at least one of the microcontroller and the signal unit may be switched off or change into a low power mode.

By switching off at least one of the electronic components of the vehicle key or by switching at least one electronic component into a low power mode, energy consumption during the low power mode of the electronic key may be reduced.

The command signals may comprise at least one of a first unlocking signal that is configured to unlock all doors of the vehicle, a locking signal that is configured to lock all doors of the vehicle, and a second unlocking signal that is configured to unlock only the trunk of the vehicle.

A method for operating an electronic key for a vehicle is described. The electronic key includes at least one button for controlling at least one vehicle function, wherein each of the at least one button can take on a pressed state and a released state. The electronic key further includes a signal unit that is configured to send command signals to the vehicle upon request of a user, and a microcontroller. The method comprises operating the electronic key in a normal state, wherein, when the electronic key is in the normal state, the electronic key is configured to change into a low power mode when no command signals are sent to the vehicle and each of the at least one button is released, and to change into an active mode when at least one of the buttons is pressed. The method further comprises, when it is detected that a button is unintentionally stuck in a pressed state and does not return to the released state, operating the electronic key in an error state, wherein, when the electronic key is in the error state, the electronic key is configured to mark the at least one button as being stuck, to change into the low power mode when no command signals are sent to the vehicle notwithstanding that at least one button is being pressed, and to change into the active mode when the stuck button is released.

Examples are now explained with reference to the drawings. In the drawings the same reference characters denote like features.
Figure 1 illustrates the general principle of an electronic vehicle key.
Figure 2 schematically illustrates an electronic key with several different buttons.
Figure 3 exemplarily illustrates in a block diagram an electronic key comprising a microcontroller.
Figure 4 illustrates in a timeline an exemplary operation of an electronic key during normal operation of the electronic key.
Figure 5 , including Figures 5A - 5D, exemplarily illustrates in a timeline different possible states of a button of an electronic key and different events which may arise during the use of the electronic key when the electronic key is in an error state.
Figure 6 , including Figures 6A and 6B, exemplarily illustrates in a timeline different possible states of two buttons of an electronic key and different events which may arise during the use of the electronic key when the electronic key is in an error state.
Figure 7 exemplarily illustrates in a flow diagram a method according to the present invention.

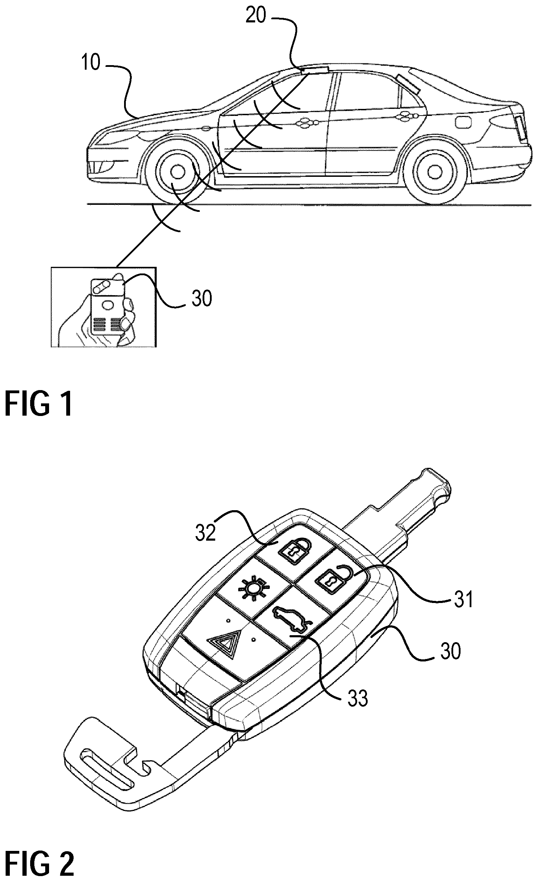

Figure 1 illustrates a vehicle 10 with an electronic key 30. The vehicle 10 may be any kind of vehicle, for example a passenger car, a truck, a bus, a train, a tractor, a motorcycle, a boat, or an aircraft. The vehicle comprises a control unit 20. The control unit 20 may be arranged anywhere within or on the vehicle 10. The control unit 20 is configured to receive signals from the electronic key 30. When a user presses a button of the electronic key 30, the electronic key 30 sends out command signals. Depending on the button that has been pressed by the user, the command signals may include a command to unlock the vehicle 10, to lock the vehicle 10, or to unlock or lock the trunk of the vehicle 10, for example.

Different exemplary buttons 31, 32, 33 of an electronic key 30 are schematically illustrated in Figure 2. For example, a first button 31 may be pressed in order to unlock all doors of a vehicle 10. A second button 32 may be pressed to lock all doors of the vehicle 10. A third button 33 may be pressed to unlock only the trunk of the vehicle 10 while all other doors of the vehicle 10 remain locked. Any alternative or additional buttons may be provided for any other functions. For example, one button may be pressed in order to open or close the windows of the vehicle 10 or to control any other vehicle functions. The buttons 31, 32, 33 that are illustrated in Figure 2 are merely an example. According to one example, the electronic key 30 may comprise only one button. Any other number of buttons >1, however, is also possible.

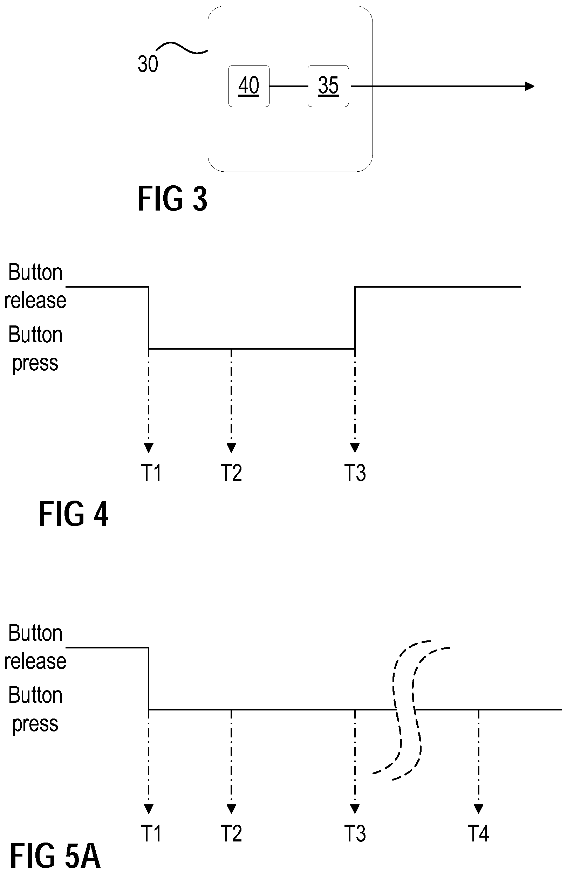

Figure 3 schematically illustrates in a block diagram an electronic key 30 with two of its electronic components. The exemplary electronic key 30 comprises a signal unit 35 that is configured to send command signals to a vehicle (vehicle not illustrated in Figure 3) . The signal unit 35 may comprise or may be coupled to an antenna (not illustrated). For example, if one of the at least one buttons 31, 32, 33 of the electronic key 30 is pressed, the signal unit 35 sends out a corresponding command signal to the vehicle 10. If, e.g., a user presses the first button 31 as illustrated in Figure 2 in order to unlock the vehicle 10, the signal unit 35 may send out a corresponding unlocking signal. When the vehicle 10 receives a command signal from an electronic key 30 that belongs to the vehicle 10, it performs the desired action. In the present example, if the first button 31 is being pressed, the vehicle 10 will be unlocked upon receipt of the corresponding command signal. Before performing the desired action, the control unit 20 of the vehicle 10 may verify whether the command signal has been sent by an authorized electronic key that belongs to the vehicle. Command signals received from unauthorized electronic keys belonging to other vehicles may be ignored.

The signal unit 35 may be coupled to a microcontroller 40, for example. The microcontroller 40 may be configured to control one or more functions of the electronic key 30. For example, the microcontroller 40 may control the function of the signal unit 35. The microcontroller 40 generally consumes quite a lot of energy during operation. As power consumption of an electronic key 30 is generally crucial, the electronic key 30 may change into a low power mode when the electronic key 30 is not needed to send out command signals or to perform any other functions. In the low power mode, some or all electronic components of the electronic key 30 such as the microcontroller 40 and/or the signal unit 35 may be turned off or may change into a low power mode. When switched off or when in the low power mode, the electronic components 35, 40 and, therefore, the whole electronic key 30 consume less energy. Therefore, energy consumption of the electronic key 30 may be reduced and, as a consequence, the battery lifetime will be increased. A battery that provides energy to the different electronic components 35, 40 of the electronic key 30 is not explicitly illustrated in Figure 3.

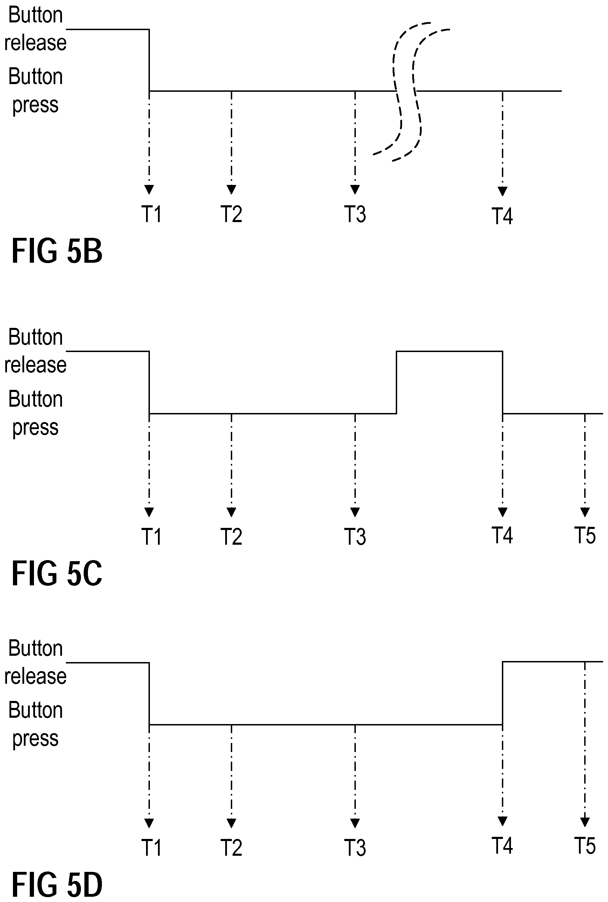

The electronic key 30 may be operated in a normal mode and in an error mode. The error mode will be explained in more detail below with respect to Figure 5. In the normal mode of the electronic key 30, one or more electronic components of the electronic key 30 but at least the microcontroller 40 may change into the low power mode when no command signals are to be sent and all of the at least one buttons 31, 32, 33 are released (no button is being pressed). The microcontroller 40 and, optionally, any further components, return from the low power mode to the normal mode when at least one button 31, 32, 33 is being pressed.

This is schematically illustrated in Figure 4 for one button. In Figure 4, the button is initially released and the microcontroller 40 is in a low power mode. At time instant T1, the button is being pressed. At this moment the microcontroller 40 (and possibly any other electronic components) return from the low power mode to an active mode. When waking up from the low power mode, the registers of the microcontroller 40 may be initialized with predetermined wakeup values, for example. During the active mode the respective command signals may be sent to the vehicle 10. According to one example, at time instant T1, the button that has been pressed may first be debounced. This, however, is optional. At time instant T2, for example, debouncing of the button may be finished and operation of the electronic key 30 may be started. That is, one or more command signals may be sent to the vehicle 10 starting at time instant T2. Once the command signals have been sent and the button is being released again, the electronic key 30 may return to the low power mode. In the example of Figure 4, the button is released at time instant T3. The electronic key 30 then remains in the low power mode until the button is being pressed again (not illustrated in Figure 4) .

Figure 4 schematically illustrates the operation of a button of the electronic key 30 during normal mode. However, it may happen that a button gets permanently stuck und does not return to its released position. This may happen, e.g., when an object unintentionally presses the button. For example, the electronic key 30 may be carried in a handbag and an object that lies next to the electronic key 30 in the handbag permanently presses one or more buttons. It is also possible that the buttons get stuck without any object permanently holding them in the pressed position, e.g., due to mechanical failure.

In some electronic keys, the electronic components (e.g., the microcontroller 40) change into a low power mode even if at least one button is stuck. This is schematically illustrated in Figure 5A. The operation at time instants T1 and T2 corresponds to the operation that has been described with respect to Figure 4 before. At time instant T3, all command signals have been sent, the button, however, is not released. The electronic key 30, however, may still enter the low power mode at time instant T3 despite the button being stuck. If no further action is taken, the electronic key 30 may return to the active mode due to invalid events. Such an invalid event may happen at time instant T4, for example. An invalid event may comprise the spike of another button or an LF request from the vehicle, for example. The spike of another button may be caused by an actuation of the other button, for example.

The spike of another button or an LF request may result in a wakeup of the microcontroller 40 from a low power mode. The button that is presently stuck may be debounced following the wakeup of the microcontroller 40. This may lead to unwanted transmissions such as "double locks" or "super locks", for example. A "double lock" or "super lock" usually describes a situation where one button is pressed twice within a predefined time interval. When pressing the button only once, the vehicle may be simply locked but, e.g., may still be unlocked from the inside by actuating the door handle. When the "double lock" or "super lock" is activated, however, the vehicle may not be opened, not even from the inside by actuating the handle, even if, for example, a window glass is broken.

The occurrence of an invalid event may cause the electronic key to unintentionally change into the active mode which causes unnecessary energy consumption. Even further, safety standards may not be met when unintentional double locks or super locks are possible.

Other electronic keys are known that prevent the components from changing into the low power mode when it is detected that at least one of the buttons is stuck. This is exemplarily illustrated in Figure 5B. In the example of Figure 5B, the electronic key 30 detects a stuck button at time instant T3. No further command signals are to be sent at this time instant T3. The microcontroller 40 and any other components are subsequently prevented from entering the low power mode and the button is marked as being stuck in the microcontroller 40. For example, a respective information may be stored in a memory of the microcontroller. At time instant T4, the same or another button is being pressed. The functionality of the other buttons is not restricted even if one button is stuck. Therefore, once a button is being pressed at time instant T4, the respective command signals may be sent to the vehicle 10. That is, the electronic key 30 functions substantially normal even if one of the buttons is stuck. However, power consumption is high, because the electronic key 30 and its components are prevented from entering the low power mode as long as at least one of the buttons 31, 32, 33 is stuck. Another disadvantage of this solution is that there is no initialization of the microcontroller's registers, because the microcontroller does not change into low power mode and, therefore, is not initialized upon wakeup.

Another possible scenario is illustrated in Figure 5C, wherein, when the electronic key 30 detects that at least one of the buttons is stuck at time instant T3, the button is marked as being stuck. The microcontroller 40, and possibly other electronic components of the electronic key 30, may subsequently change into the low power mode, even if at least one of the buttons is not released. At time instant T4, the same button is being pressed again, or at least a user is trying to press the stuck button again. The previously stuck button may also have been released in the meantime as is schematically illustrated in Figure 5C. However, as at least one of the buttons is still being marked as being stuck, further requests may not be processed. That is, no command signal may be sent to the vehicle 10 as long as at least one button 31, 32, 33 is marked as being stuck. The microcontroller 40 may subsequently return to the low power mode at time instant T5 without having sent any command signals. In this example, energy consumption is reduced, however, the electronic key does not function as intended when at least one of the buttons is stuck.

Therefore, according to an example according to the present invention that is illustrated in Figure 5D, the electronic key 30 changes into an error mode when it is detected (e.g., at time instant T3) that a button is stuck. In the error mode, the button is marked as being stuck. For example, an according information may be stored in a memory of the microcontroller 40 which marks the button as stuck. The electronic key 30 may subsequently change into the low power mode.

As has been described above with respect to Figure 4, in the normal mode the electronic key 30 returns from the low power mode to the active mode when one of the buttons 31, 32, 33 is being pressed. When the electronic key 30 is in the error mode, however, the microcontroller 40 and any other components of the electronic key 30 may return from the low power mode to the active mode when the at least one button is released again. In the example of Figure 5D, this happens at time instant T4. When the button that was previously stuck is released again at time instant T4, the microcontroller 40 returns to the active mode. Optionally, the microcontroller 40 may perform a button debounce process as has been described before. If a debouncing of the button that was previously stuck is performed, the debouncing may end at time instant T5. The electronic key 30 may then return to normal mode. The information that was previously stored in the memory of the microcontroller 40 marking the button as stuck may be deleted from the microcontroller memory. Back in the normal mode, the microcontroller 40 may return to the low power mode and will wake up once more when a button is pressed (not illustrated in Figure 5D) .

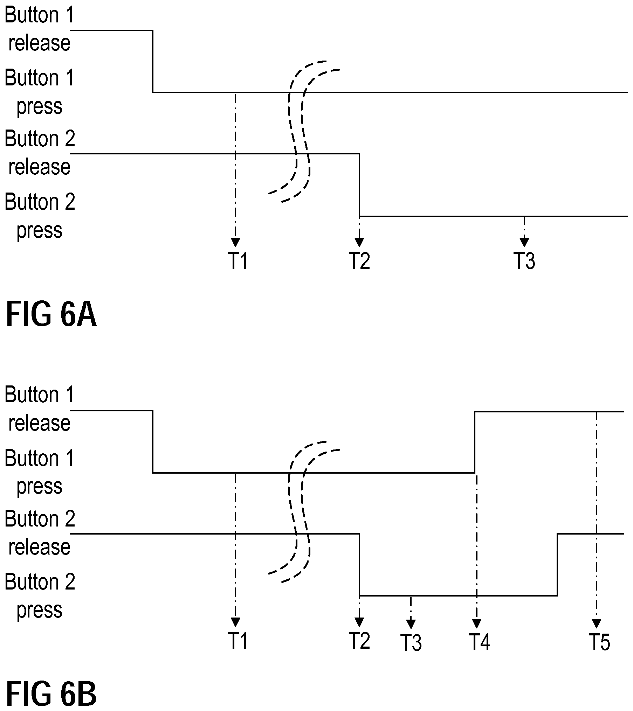

The main differences between the normal mode and the error mode will briefly summarized in the following. In the error mode, at least one of the buttons is marked as being stuck. In normal mode, any such information is deleted from memory. In the error mode, the electronic key 30 will return from the low power mode to the active mode when the previously stuck button is released again, while in the normal mode the electronic key 30 returns from the low power mode to the active mode when a button is pressed. Figure 6A exemplarily illustrates an example wherein the electronic key comprises at least two buttons. Initially, a first button and a second button may both be released and the electronic key may be in the normal mode. At time instant T1 it may be detected that button 1 is stuck. Button 1 may be marked as stuck (e.g., by storing a respective information in a memory of the microcontroller), the electronic key may change to the error mode and may then change into the low power mode, as no functionality of the electronic key is needed at this time. At time instant T2, the second button is pressed. Therefore, the electronic key may return to the active mode and the microcontroller may resume its operation. As has been described above, optionally the second button may be debounced. The debouncing may be finished at time instant T3. At this time instant T3, the electronic key is ready for operation and knows that the first button is stuck and the second button has been debounced. Command signals may subsequently be sent following the pressing of the second button. After sending the command signals has been finished, the electronic key may return into low power mode.

In the example that is illustrated in Figure 6B, initially both buttons are released. The first button may then be pressed while the second button remains to be released. At time instant T1, functionality of the first button ends (all required command signals have been sent), but the button does not return to its released position. Therefore, the first button is marked as being stuck (e.g., by storing a respective information in a memory of the microcontroller). As no further activity of the electronic key is required, the electronic key may return to the low power mode.

At time instant T2, the second button is pressed. The electronic key, therefore, returns to the active mode. The electronic key knows that the first button is stuck but may still process the present request. For example, the second button may be debounced and, when debouncing is finished at time instant T3, the required command signals may be sent. In the example illustrated in Figure 6B, the first button returns to its released position at time instant T4. This may happen, for example, before the electronic key returns to the low power mode. The electronic key, therefore, may return from the error mode to the normal mode at time instant T4. That is, the first button is no longer marked as stuck in the microcontroller memory. When, e.g., at time instant T5, the second button has also returned to its released position and no further activity of the electronic key is required for the moment, the electronic key may return to the low power mode.

In the example illustrated in Figure 6B, the first button returns to its released position while the electronic key is in the active mode. Therefore, the electronic key may return from the error mode to the normal mode before again returning to the low power mode. If the first button is marked as stuck and returns to its released position while the electronic key is in the low power mode, the electronic key may return from the error mode to the normal mode the next time it returns to the active mode. That is, it may remain in the error mode while it is still in the low power mode, as the electronic components that are needed to return to the normal mode are switched off or are in a low power mode.

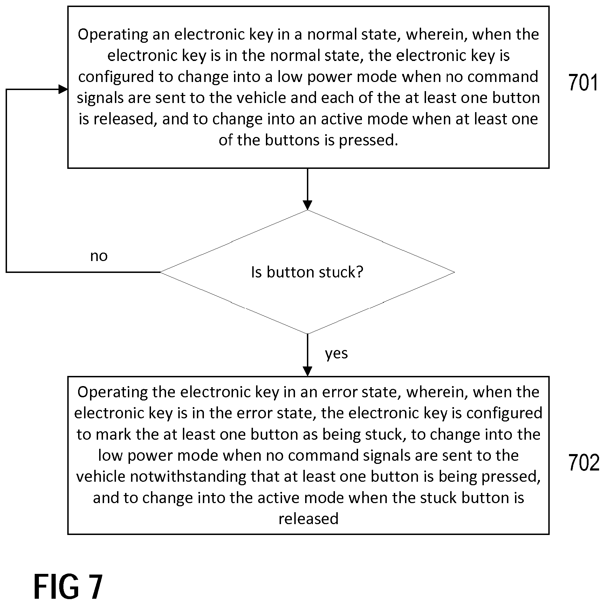

Figure 7 exemplarily illustrates a method for operating an electronic key (30) for a vehicle according to one embodiment of the present invention. The electronic key 30 comprises at least one button 31, 32, 33 for controlling at least one vehicle function. Each of the at least one button 31, 32, 33 can take on a pressed state and a released state. The electronic key further comprises a signal unit 35 that is configured to send command signals to the vehicle 10 upon request of a user, and a microcontroller 40. The method comprises operating the electronic key 30 in a normal state (step 701), wherein, when the electronic key 30 is in the normal state, the electronic key 30 is configured to change into a low power mode when no command signals are sent to the vehicle 10 and each of the at least one button 31, 32, 33 is released, and to change into an active mode when at least one of the buttons 31, 32, 33 is pressed. The method further comprises, when it is detected that a button 31, 32, 33 is unintentionally stuck in a pressed state and does not return to the released state, operating the electronic key 30 in an error state (step 702), wherein, when the electronic key 30 is in the error state, the electronic key 30 is configured to mark the at least one button 31, 32, 33 as being stuck, to change into the low power mode when no command signals are sent to the vehicle 10 notwithstanding that at least one button 31, 32, 33 is being pressed, and to change into the active mode when the stuck button 31, 32, 33 is released.

### List of reference signs

- 10: vehicle
- 20: control unit
- 30: electronic key
- 31, 32, 33: buttons
- 35: signal unit
- 40: microcontroller

## Claims

1. An electronic key (30) for a vehicle (10) comprises
at least one button (31, 32, 33) for controlling at least one vehicle function, wherein each of the at least one button (31, 32, 33) can take on a pressed state and a released state;
a signal unit (35) that is configured to send command signals to the vehicle (10) upon request of a user; and
a microcontroller (40), wherein
the electronic key (30) can be operated in a normal state and in an error state, and wherein
when the electronic key (30) is in the normal state, the electronic key (30) is configured to change into a low power mode when no command signals are sent to the vehicle (10) and each of the at least one button (31, 32, 33) is released, and to change into an active mode when at least one of the buttons (31, 32, 33) is pressed, and
when it is detected that a button (31, 32, 33) is unintentionally stuck in a pressed state and does not return to the released state, the electronic key (30) is configured to change into the error state, wherein, when the electronic key (30) is in the error state, the electronic key (30) is configured to mark the at least one button (31, 32, 33) as being stuck, to change into the low power mode when no command signals are sent to the vehicle (10) notwithstanding that at least one button (31, 32, 33) is being pressed, and to change from the low power mode into the active mode when the stuck button (31, 32, 33) is released.

2. The electronic key (30) of claim 1, wherein, when the electronic key (30) is in the normal mode and at least one button (31, 32, 33) is pressed and causes the electronic key (30) to switch from the low power mode to the active mode, at least one command signal is sent to the vehicle (10) in reaction to the at least one button (31, 32, 33) being pressed.

3. The electronic key (30) of claim 2, wherein, before sending the at least one command signal to the vehicle (10), the button (31, 32, 33) that has been pressed is debounced.

4. The electronic key (30) of any of claims 1 to 3, wherein, when it is detected that the at least one stuck button (31, 32, 33) has returned to its released position, the electronic key (30) returns from the error mode to the normal mode.

5. The electronic key (30) of any of claims 1 to 4, wherein marking the at least one button (31, 32, 33) as being stuck comprises storing a respective information in a memory of the microcontroller (40) .

6. The electronic key (30) of claim 5, wherein, when the at least one stuck button (31, 32, 33) has returned to its released position, the information is deleted from the memory of the microcontroller (40).

7. The electronic key (30) of any of the preceding claims, comprising at least two buttons (31, 32, 33), wherein, when it is detected that one of the buttons (31, 32, 33) is stuck and the electronic key (30) changes into the error mode, the electronic key (30) is further configured to change from the low power mode into the active mode when at least one of the remaining buttons (31, 32, 33) is pressed.

8. The electronic key (30) of any of the preceding claims, wherein, when the electronic key (30) changes into the low power mode, at least one of the microcontroller (40) and the signal unit (35) is switched off or changes into a low power mode.

9. The electronic key (30) of any of the preceding claims, wherein the command signals comprise at least one of
a first unlocking signal that is configured to unlock all doors of the vehicle (10),
a locking signal that is configured to lock all doors of the vehicle (10),
a second unlocking signal that is configured to unlock only the trunk of the vehicle (10).

10. A method for operating an electronic key (30) for a vehicle (10), wherein the electronic key (30) comprises at least one button (31, 32, 33) for controlling at least one vehicle function, and wherein each of the at least one button (31, 32, 33) can take on a pressed state and a released state, a signal unit (35) that is configured to send command signals to the vehicle (10) upon request of a user, and a microcontroller (40), wherein the method comprises
operating the electronic key (30) in a normal state, wherein, when the electronic key (30) is in the normal state, the electronic key (30) is configured to change into a low power mode when no command signals are sent to the vehicle (10) and each of the at least one button (31, 32, 33) is released, and to change into an active mode when at least one of the buttons (31, 32, 33) is pressed; and
when it is detected that a button (31, 32, 33) is unintentionally stuck in a pressed state and does not return to the released state, operating the electronic key (30) in an error state, wherein, when the electronic key (30) is in the error state, the electronic key (30) is configured to mark the at least one button (31, 32, 33) as being stuck, to change into the low power mode when no command signals are sent to the vehicle (10) notwithstanding that at least one button (31, 32, 33) is being pressed, and to change into the active mode when the stuck button (31, 32, 33) is released.

## Patentansprüche

1. Elektronischer Schlüssel (30) für ein Fahrzeug (10), der umfasst:
wenigstens eine Taste (31, 32, 33) zum Steuern wenigstens einer Fahrzeugfunktion, wobei jede der wenigstens einen Taste (31, 32, 33) einen gedrückten Zustand und einen gelösten Zustand annehmen kann;
eine Signaleinheit (35), die dazu ausgebildet ist, auf Anforderung eines Benutzers Befehlssignale an das Fahrzeug (10) zu senden; und
eine Mikrosteuereinheit (40), wobei
der elektronische Schlüssel (30) in einem Normalzustand und in einem Fehlerzustand betrieben werden kann, und
wobei,
wenn sich der elektronische Schlüssel (30) im Normalzustand befindet, der elektronische Schlüssel (30) dazu ausgebildet ist, in einen Niedrigenergiemodus zu wechseln, wenn keine Befehlssignale an das Fahrzeug (10) gesendet werden und jede der wenigstens einen Taste (31, 32, 33) gelöst ist, und in einen aktiven Modus zu wechseln, wenn wenigstens eine der Tasten (31, 32, 33) gedrückt wird, und wobei
wenn erkannt wird, dass eine Taste (31, 32, 33) ungewollt in einem gedrückten Zustand verklemmt ist und nicht in den gelösten Zustand zurückkehrt, der elektronische Schlüssel (30) dazu ausgebildet ist, in den Fehlerzustand zu wechseln, wobei, wenn sich der elektronische Schlüssel (30) im Fehlerzustand befindet, der elektronische Schlüssel (30) dazu ausgebildet ist, die wenigstens eine Taste (31, 32, 33) als verklemmt zu markieren, in den Niedrigenergiemodus zu wechseln, wenn keine Befehlssignale an das Fahrzeug (10) gesendet werden, obwohl wenigstens eine Taste (31, 32, 33) gedrückt ist, und aus dem Niedrigenergiemodus in den aktiven Modus zu wechseln, wenn die verklemmte Taste (31, 32, 33) gelöst wird.

2. Elektronischer Schlüssel (30) nach Anspruch 1, wobei, wenn sich der elektronische Schlüssel (30) im Normalmodus befindet und wenigstens eine Taste (31, 32, 33) gedrückt wird und den elektronischen Schlüssel (30) veranlasst, vom Niedrigenergiemodus in den aktiven Modus zu wechseln, in Reaktion auf das Drücken der wenigstens einen Taste (31, 32, 33) wenigstens ein Befehlssignal an das Fahrzeug (10) gesendet wird.

3. Elektronischer Schlüssel (30) nach Anspruch 2, wobei vor dem Senden des wenigstens einen Befehlssignals an das Fahrzeug (10) die gedrückte Taste (31, 32, 33) entprellt wird.

4. Elektronischer Schlüssel (30) nach einem der Ansprüche 1 bis 3, wobei, wenn erkannt wird, dass die wenigstens eine verklemmte Taste (31, 32, 33) in ihre gelöste Position zurückgekehrt ist, der elektronische Schlüssel (30) vom Fehlermodus in den Normalmodus zurückkehrt.

5. Elektronischer Schlüssel (30) nach einem der Ansprüche 1 bis 4, wobei das Markieren der wenigstens einen Taste (31, 32, 33) als verklemmt umfasst, eine entsprechende Information in einem Speicher der Mikrosteuereinheit (40) zu speichern.

6. Elektronischer Schlüssel (30) nach Anspruch 5, wobei, wenn die wenigstens eine verklemmte Taste (31, 32, 33) in ihre gelöste Position zurückgekehrt ist, die Information aus dem Speicher der Mikrosteuereinheit (40) gelöscht wird.

7. Elektronischer Schlüssel (30) nach einem der vorstehenden Ansprüche, wenigstens zwei Tasten (31, 32, 33) umfassend, wobei, wenn erkannt wird, dass eine der Tasten (31, 32, 33) verklemmt ist, und der elektronische Schlüssel (30) in den Fehlermodus wechselt, der elektronische Schlüssel (30) ferner dazu ausgebildet ist, vom Niedrigenergiemodus in den aktiven Modus zu wechseln, wenn wenigstens eine der verbleibenden Tasten (31, 32, 33) gedrückt wird.

8. Elektronischer Schlüssel (30) nach einem der vorstehenden Ansprüche, wobei, wenn der elektronische Schlüssel (30) in den Niedrigenergiemodus wechselt, wenigstens entweder die Mikrosteuereinheit (40) und/oder die Signaleinheit (35) abgeschaltet wird oder in einen Niedrigenergiemodus wechselt.

9. Elektronischer Schlüssel (30) nach einem der vorstehenden Ansprüche, wobei die Befehlssignale wenigstens eines der Folgenden umfassen:
ein erstes Entriegelungssignal, das dazu ausgebildet ist, alle Türen des Fahrzeugs (10) zu entriegeln,
ein Verriegelungssignal, das dazu ausgebildet ist, alle Türen des Fahrzeugs (10) zu verriegeln,
ein zweites Entriegelungssignal, das dazu ausgebildet ist, nur den Kofferraum des Fahrzeugs (10) zu entriegeln.

10. Verfahren zum Betreiben eines elektronischen Schlüssels (30) für ein Fahrzeug (10), wobei der elektronische Schlüssel (30) umfasst: wenigstens eine Taste (31, 32, 33) zum Steuern wenigstens einer Fahrzeugfunktion, und wobei jede der wenigstens einen Taste (31, 32, 33) einen gedrückten Zustand und einen gelösten Zustand annehmen kann, eine Signaleinheit (35), die dazu ausgebildet ist, auf Anforderung eines Benutzers Befehlssignale an das Fahrzeug (10) zu senden, und eine Mikrosteuerung (40), wobei das Verfahren umfasst:
Betreiben des elektronischen Schlüssels (30) in einem Normalzustand, wobei, wenn sich der elektronische Schlüssel (30) im Normalzustand befindet, der elektronische Schlüssel (30) dazu ausgebildet ist, in einen Niedrigenergiemodus zu wechseln, wenn keine Befehlssignale an das Fahrzeug (10) gesendet werden und jede der wenigstens einen Taste (31, 32, 33) gelöst ist, und in einen aktiven Modus zu wechseln, wenn wenigstens eine der Tasten (31, 32, 33) gedrückt wird; und
wenn erkannt wird, dass eine Taste (31, 32, 33) ungewollt in einem gedrückten Zustand verklemmt ist und nicht in den gelösten Zustand zurückkehrt, Betreiben des elektronischen Schlüssels (30) in einem Fehlerzustand, wobei, wenn sich der elektronische Schlüssel (30) im Fehlerzustand befindet, der elektronische Schlüssel (30) dazu ausgebildet ist, die wenigstens eine Taste (31, 32, 33) als verklemmt zu markieren, in den Niedrigenergiemodus zu wechseln, wenn keine Befehlssignale an das Fahrzeug (10) gesendet werden, obwohl wenigstens eine Taste (31, 32, 33) gedrückt ist, und in den aktiven Modus zu wechseln, wenn die verklemmte Taste (31, 32, 33) gelöst wird.

## Revendications

1. Clé électronique (30) pour un véhicule (10) comprenant au moins un bouton (31, 32, 33) pour commander au moins une fonction du véhicule, où chacun de l'au moins un bouton (31, 32, 33) peut prendre un état pressé et un état relâché ;
une unité de signal (35) qui est configurée pour envoyer des signaux de commande au véhicule (10) à la demande d'un utilisateur ; et
un microcontrôleur (40), dans lequel :
la clé électronique (30) peut être actionnée dans un état normal et dans un état d'erreur, et où :
lorsque la clé électronique (30) est dans l'état normal, la clé électronique (30) est configurée pour passer dans un mode de faible puissance lorsqu'aucun signal de commande n'est envoyé au véhicule (10) et que chacun de l'au moins un bouton (31, 32, 33) est relâché, et pour passer dans le mode actif lorsqu'au moins un des boutons (31, 32, 33) est pressé, et
lorsqu'il est détecté qu'un bouton (31, 32, 33) est involontairement bloqué dans un état pressé et ne revient pas à l'état relâché, la clé électronique (30) est configurée pour passer dans l'état d'erreur, où, lorsque la clé électronique (30) est dans l'état d'erreur, la clé électronique (30) est configurée pour marquer l'au moins un bouton (31, 32, 33) comme étant bloqué, pour passer dans un mode de faible puissance lorsqu'aucun signal de commande n'est envoyé au véhicule (10) bien qu'au moins un bouton (31, 32, 33) soit pressé, et pour passer du mode de faible puissance au mode actif lorsque le bouton bloqué (31, 32, 33) est relâché.

2. Clé électronique (30) selon la revendication 1, dans laquelle, lorsque la clé électronique (30) est dans le mode normal et qu'au moins un bouton (31, 32, 33) est pressé et amène la clé électronique (30) à passer du mode de faible puissance au mode actif, au moins un signal de commande est envoyé au véhicule (10) en réaction l'au moins un bouton (31, 32, 33) étant pressé.

3. Clé électronique (30) selon la revendication 2, dans laquelle, avant d'envoyer l'au moins un signal de commande au véhicule (10), le bouton (31, 32, 33) qui a été pressé est déconnecté.

4. Clé électronique (30) selon l'une quelconque des revendications 1 à 3, dans laquelle, lorsqu'il est détecté que l'au moins un bouton (31, 32, 33) bloqué est revenu à sa position libérée, la clé électronique (30) revient du mode erreur au mode normal.

5. Clé électronique (30) selon l'une quelconque des revendications 1 à 4, dans laquelle le marquage de l'au moins un bouton (31, 32, 33) comme étant bloqué comprend le stockage d'une information respective dans une mémoire du microcontrôleur (40).

6. Clé électronique (30) selon la revendication 5, dans laquelle, lorsque l'au moins un bouton bloqué (31, 32, 33) est revenu à sa position libérée, l'information est effacée de la mémoire du microcontrôleur (40).

7. Clé électronique (30) selon l'une quelconque des revendications précédentes, comprenant au moins deux boutons (31, 32, 33), dans laquelle, lorsqu'il est détecté qu'un des boutons (31, 32, 33) est bloqué et que la clé électronique (30) passe dans un mode erreur, la clé électronique (30) est en outre configurée pour passer du mode de faible puissance au mode actif lorsqu'au moins un des boutons restants (31, 32, 33) est pressé.

8. Clé électronique (30) selon l'une quelconque des revendications précédentes, dans laquelle, lorsque la clé électronique (30) passe dans un mode de faible puissance, au moins l'un du microcontrôleur (40) et de l'unité de signalisation (35) est désactivé ou passe dans un mode de faible puissance.

9. Clé électronique (30) selon l'une quelconque des revendications précédentes, dans laquelle les signaux de commande comprennent au moins l'un des éléments suivants :
un premier signal de déverrouillage qui est configuré pour déverrouiller toutes les portes du véhicule (10),
un signal de verrouillage qui est configuré pour verrouiller toutes les portes du véhicule (10),
un deuxième signal de déverrouillage qui est configuré pour déverrouiller uniquement le coffre du véhicule (10).

10. Procédé de fonctionnement d'une clé électronique (30) pour un véhicule (10), dans lequel la clé électronique (30) comprend au moins un bouton (31, 32, 33) pour commander au moins une fonction du véhicule, et où chacun de l'au moins un bouton (31, 32, 33) peut prendre un état pressé et un état relâché, une unité de signal (35) qui est configurée pour envoyer des signaux de commande au véhicule (10) à la demande d'un utilisateur, et un microcontrôleur (40), où le procédé comprend les étapes suivantes :
faire fonctionner la clé électronique (30) dans un état normal, dans lequel, lorsque la clé électronique (30) est dans l'état normal, la clé électronique (30) est configurée pour passer dans un mode de faible puissance lorsqu'aucun signal de commande n'est envoyé au véhicule (10) et que chacun de l'au moins un bouton (31, 32, 33) est relâché, et pour passer dans un mode actif lorsqu'au moins un des boutons (31, 32, 33) est pressé ; et
lorsqu'il est détecté qu'un bouton (31, 32, 33) est involontairement bloqué dans un état pressé et ne revient pas dans l'état relâché, faire fonctionner la clé électronique (30) dans un état d'erreur, où, lorsque la clé électronique (30) est dans l'état d'erreur, la clé électronique (30) est configurée pour marquer l'au moins un bouton (31, 32, 33) comme étant bloqué, pour passer dans le mode de faible puissance lorsqu'aucun signal de commande n'est envoyé au véhicule (10) bien qu'au moins un bouton (31, 32, 33) soit pressé, et pour passer dans le mode actif lorsque le bouton bloqué (31, 32, 33) est relâché.
